# EUROPÄISCHE PATENTSCHRIFT

(11) **EP 3 194 217 B1**
(45) Veröffentlichungstag und Bekanntmachung des Hinweises auf die Patenterteilung: **05.08.2020**
(21) Anmeldenummer: 15775622.2
(22) Anmeldetag: 10.09.2015
(51) Int. Cl.: B60R 21/231

(54) **ADAPTIVES, ENTFALTBARES RÜCKHALTEELEMENT FÜR EIN FAHRZEUGSICHERHEITSSYSTEM, GASSACKMODUL UND FAHRZEUGSICHERHEITSSYSTEM MIT EINEM SOLCHEN RÜCKHALTEELEMENT SOWIE VERWENDUNG DES FLOSSENSTRAHLEFFEKTS IN EINEM ADAPTIVEN RÜCKHALTEELEMENT**
ADAPTIVE, DEPLOYABLE RESTRAINT ELEMENT FOR A VEHICLE SAFETY SYSTEM, AIRBAG MODULE, AND VEHICLE SAFETY SYSTEM HAVING A RESTRAINT ELEMENT OF THIS TYPE, AND USE OF THE FIN RAY EFFECT IN AN ADAPTIVE RESTRAINT ELEMENT
ÉLÉMENT DE RETENUE DÉPLIABLE ADAPTATIF POUR SYSTÈME DE SÉCURITÉ DE VÉHICULE, MODULE DE COUSSIN DE SÉCURITÉ GONFLABLE ET SYSTÈME DE SÉCURITÉ DE VÉHICULE COMPRENANT UN ÉLÉMENT DE RETENUE DE CE TYPE ET UTILISATION DE L'EFFET RAYON DE NAGEOIRE DANS UN ÉLÉMENT DE RETENUE ADAPTATIF

(30) Priorität: 19.09.2014 DE 102014013649
(43) Veröffentlichungstag der Anmeldung: 26.07.2017
(73) Patentinhaber: ZF Airbag Germany GmbH, 84544 Aschau a. Inn (DE)
(72) Erfinder: JUNG, Christian, 84453 Mühldorf (DE); KAPFELSPERGER, Thomas, 84453 Mühldorf (DE)
(74) Vertreter: ZF Patentabteilung - DIPS
(86) Internationale Anmeldenummer: PCT/EP2015/001820
(87) Internationale Veröffentlichungsnummer: WO 2016/041626

(56) Entgegenhaltungen:
- DE-A1-102007 052 246
- DE-A1-102010 054 651
- DE-A1-102012 213 284
- DE-A1-102013 202 036
- DE-C1- 10 119 351
- JP-A- 2009 067 330
- US-A1- 2012 193 896
- Felix Klingmüller: , 14. Mai 2011 (2011-05-14), Seiten 5-1, XP055236834, Gefunden im Internet: URL:www.morgers.ch/Bionik/Fin%20Ray%20-Eff ekt/Flossenstrahleffekt.doc [gefunden am 2015-12-16]

## Beschreibung

Die Erfindung betrifft ein adaptives, entfaltbares Rückhalteelement für ein Fahrzeugsicherheitssystem. Ferner betrifft die Erfindung ein Gassackmodul und ein Fahrzeugsicherheitssystem für ein Fahrzeug mit einem solchen Rückhalteelement. Überdies gibt die Erfindung die Verwendung des Flossenstrahleffekts in einem adaptiven Rückhalteelement an.

Entfaltbare Rückhalteelemente, insbesondere in Form von Airbags, sind seit Jahren Standard bei der Sicherheitsausstattung von Kraftfahrzeugen. Die Airbags umfassen üblicherweise einen durch ein textiles Material begrenzten Gassack, der mit Hilfe eines Gasgenerators im Falle eines Aufpralls aufgeblasen wird. Der Gassack spannt sich dabei zwischen einem Fahrzeuginsassen und Fahrzeugteilen auf, um den Kontakt zwischen dem Fahrzeuginsassen und der starren Karosseriestruktur zu vermeiden. Generell besteht die Anforderung, Gassäcke derart zu gestalten, dass sie für unterschiedliche Fahrzeuginsassen, die sich insbesondere in Größe und/oder Masse unterscheiden können, einsetzbar sind. Insofern besteht das Bedürfnis, derartige Rückhalteelemente adaptierbar bzw. adaptiv zu gestalten. Dies erfolgt meist durch Gasaustrittsöffnungen, die in das textile Umhüllungsmaterial des Gassacks eingearbeitet sind. Durch die Gasaustrittsöffnungen kann das zum Aufblasen des Gassacks verwendete Gas kontrolliert abströmen, so dass sich der Gassack allein durch die Änderung des im Gassack herrschenden Drucks an unterschiedliche Aufprallszenarien anpassen kann. Zusätzlich kann die Adaptierbarkeit des Gassacks durch mehrstufige, insbesondere zweistufige, Gassackgeneratoren bewirkt werden, so dass die Gasfüllmenge innerhalb des Gassacks bedarfsweise erhöht werden kann. Derartige zweistufige Gasgeneratoren erfordern eine komplexe Steuerung und weisen einen konstruktive aufwändigen Aufbau auf.

DE 101 19 351 C1 offenbart eine Insassenschutzvorrichtung. DE 10 2012 213 284 A1 offenbart eine Gassackanordnung.

Die Aufgabe der Erfindung besteht darin, ein adaptives, entfaltbares Rückhalteelement anzugeben, das eine spezifische Rückhaltekapazität aufweist, die zumindest teilweise vom Gasdruck innerhalb des Rückhaltesystems unabhängig ist. Eine zusätzliche Aufgabe der Erfindung besteht darin, ein Gassackmodul und ein Insassensicherheitssystem mit einem derartigen Rückhalteelement anzugeben.

Erfindungsgemäß wird diese Aufgabe im Hinblick auf das Rückhalteelement durch den Gegenstand des Patentanspruchs 1, im Hinblick auf das Gassackmodul durch den Gegenstand des Patentanspruchs 16 und im Hinblick auf das Insassensicherheitssystem durch den Gegenstand des Patentanspruchs 17 gelöst.

Insbesondere beruht die Erfindung auf dem Gedanken, ein adaptives, entfaltbares Rückhalteelement für ein Fahrzeugsicherheitssystem mit wenigstens zwei zumindest abschnittsweise V-förmig zueinander angeordneten Schenkelelementen anzugeben, zwischen welchen mindestens eine Querstrebe angeordnet ist, die die Schenkelelemente verbindet. Die Schenkelelemente und/oder die Querstrebe sind/ist aufblasbar.

Das erfindungsgemäße Rückhalteelement unterscheidet sich von herkömmlichen Gassäcken bzw. Airbags durch die Struktur aus Schenkelelementen und Querstreben. Diese bilden ein aus anderen Bereichen der Technik bekanntes Prinzip nach, das als Flossenstrahleffekt bezeichnet wird. Insbesondere in der industriellen Robotik werden Greiferelemente erprobt, die sich selbsttätig an die Kontur des zu greifenden Gegenstands anpassen und für diese Adaptierbarkeit den Flossenstrahleffekt nutzen. Das dahinterstehende technische Prinzip ist der knöchernen Struktur von Fischflossen entlehnt, die bei punktueller Beaufschlagung mit einer Kraft nicht in Kraftrichtung ausweichen, sondern deren Spitze sich überraschenderweise in zur Kraftwirkrichtung entgegengesetzten Richtung bewegt. Durch die punktuelle Krafteinwirkung krümmt sich also eine derartige Fischflosse in entgegengesetzte Richtung.

Dieses Prinzip wird bei der Erfindung auf ein adaptives, entfaltbares Rückhalteelement übertragen. Dies stellt einen Paradigmenwechsel dar, weil im Unterschied zu herkömmlichen Rückhalteelementen, insbesondere Airbags, die Adaptierbarkeit an unterschiedliche Aufprallszenarien nicht hauptsächlich durch den innerhalb des Rückhalteelements herrschenden Druck reguliert wird, sondern vielmehr durch die Struktur des Rückhalteelements selbst.

Die bei dem erfindungsgemäßen Rückhalteelement vorgesehenen Schenkelelemente, die V-förmig zueinander angeordnet und mit einer oder mehreren Querstreben verbunden sind, wird die Struktur einer knöchernen Fischflosse nachgebildet. Dabei sind die Schenkelelemente und/oder die Querstrebe(n) aufblasbar, so dass sich das Rückhalteelement schnell entfalten kann und nach Art eines Airbags einen Aufprallschutz für einen Fahrzeuginsassen bietet. Gleichzeitig bewirkt die fischflossenartige Struktur des Rückhalteelements, dass sich dieses im aufgeblasenen Zustand an das Aufprallszenario anpassen kann. Insbesondere können in das Rückhalteelement eintauchende Körperteile eines Fahrzeuginsassen umschlossen werden, so dass gleichzeitig eine Führung des Körperteils während des Aufpralls erfolgt. Dies reduziert die Verletzungsrisiken.

Gleichzeitig wird mit der Erfindung erreicht, dass das zum Aufblasen des Rückhalteelements erforderliche Gasvolumen reduziert ist, da nicht das gesamte Volumen eines herkömmlichen Gassacks mit Gas gefüllt werden muss, sondern lediglich die Querstrebe(n) und/oder Schenkelelemente des Rückhalteelements. Dabei kann das gesamte Rückhalteelement insgesamt ein Volumen einnehmen, das dem Volumen eines herkömmlichen Gassacks entspricht. Demgegenüber weist das erfindungsgemäße Rückhalteelement jedoch vorzugsweise Durchbrechungen auf, die durch die Schenkelelemente und die Querstrebe(n) begrenzt sind und keine Gasbefüllung erfordern. Bei der Erfindung hat das Gas folglich nahezu ausschließlich die Aufgabe, das Rückhalteelement zu entfalten und dessen Struktur zu stabilisieren. Die Adaptierbarkeit an ein bestimmtes Aufprallszenario wird hingegen durch die Struktur bzw. den konstruktiven Aufbau des Rückhalteelements selbst realisiert.

Wegen der im Vergleich zu herkömmlichen Gassäcken reduzierten Gasmenge ist das erfindungsgemäße Rückhalteelement robust und von äußeren Umgebungsbedingungen, beispielsweise Temperatur und/oder Druck, im Wesentlichen unabhängig bzw. jedenfalls nur in einem reduzierten Maß abhängig. Schließlich wird durch die verbesserte Adaptierbarkeit des erfindungsgemäßen Rückhalteelements ermöglicht, ggf. auf zweistufige Gasgeneratoren zu verzichten, so dass die Produktionskosten und der Aufwand für die aufwändige Steuerung von zweistufigen Gasgeneratoren reduziert werden können. Im Allgemeinen können auch wegen der vergleichsweise geringen Gasmenge, die zum Aufblasen des erfindungsgemäßen Rückhalteelements erforderlich ist, relativ kleine Gasgeneratoren eingesetzt werden, was sich ebenfalls auf die Produktionskosten auswirkt.

Gemäß einer bevorzugten Ausführungsform der Erfindung ist vorgesehen, dass das Rückhalteelement eine im Querschnitt dreieckförmige oder rautenförmige Außenkontur aufweist. Die dreieckförmige Außenkontur wird insbesondere hauptsächlich durch die V-förmig zueinander angeordneten Schenkelelemente bestimmt. Es ist auch möglich, dass das Rückhalteelement im Querschnitt zwei an einer Basis der Schenkelelemente gespiegelte Dreiecksformen aufweist, so dass sich insgesamt eine rautenförmige Außenkontur im Querschnitt des Rückhalteelements ergibt. Mit anderen Worten kann das Rückhalteelement im Querschnitt zwei Abschnitte aufweisen, die jeweils aus V-förmig zueinander angeordneten Schenkelelementen gebildet sind. Die beiden Abschnitte grenzen vorzugsweise unmittelbar aneinander, so dass das Rückhalteelement im Querschnitt insgesamt eine rautenförmige Außenkontur zeigt. Insofern bleibt die Grundkontur eines Dreiecks bestehen, die eine gute Grundlage für die Realisierung des Flossenstrahleffekts bildet.

Das Rückhalteelement kann außerdem eine im Längsschnitt kreisförmige oder ovale oder länglich gekrümmte Außenkontur aufweisen. Je nach Einsatzort des Rückhalteelements in einem Fahrzeuginsassensicherheitssystem sind unterschiedliche Formen vorteilhaft. Beispielsweise kann das Rückhalteelement für den Einsatz als Fahrerairbag eine im Längsschnitt kreisförmige Außenkontur aufweisen. Die kreisförmige Außenkontur (Längskontur) des Rückhalteelements kann beispielsweise durch Rotation der dreieckförmigen Querschnittskontur gebildet sein. Mit anderen Worten kann das Rückhalteelement eine rotationssymmetrische Form aufweisen, so dass sich im Längsschnitt eine kreisförmige Außenkontur und im Querschnitt eine dreieckförmige Außenkontur zeigt. Die Außenkontur des Rückhalteelements im Längsschnitt kann auch oval sein, wobei im Querschnitt vorzugsweise ebenfalls eine rautenförmige Außenkontur erkennbar ist. Die länglich gekrümmte Außenkontur des Rückhalteelements, die alternativ möglich ist, zeigt sich vorzugsweise dadurch, dass die Schenkelelemente an ihrer Verbindungsstelle miteinander einen Grad bilden, der gekrümmt verläuft.

Bei einer bevorzugten Ausgestaltung der Erfindung sind die Schenkelelemente durch eine textile, insbesondere flexible Stoffbahn oder durch mehrere miteinander verbundene textile, insbesondere flexible Stoffbahnen gebildet. Die textilen Stoffbahnen können flächig ausgebildet sein und die Querstreben miteinander verbinden. Es ist auch möglich, dass die textilen Stoffbahnen Kammern begrenzen, so dass die Schenkelelemente aufblasbar sind. Insbesondere können die für herkömmliche Airbags verwendeten Textilien zum Einsatz gelangen. Die Stoffbahnen können zwischen den Querstreben Lufteintrittsöffnungen aufweisen, so dass in Freiräume, die zwischen den Querstreben gebildet sind, Umgebungsluft eintreten kann.

Es ist bevorzugt vorgesehen, dass die Schenkelelemente zu einer gemeinsamen Spitze konvergieren, insbesondere zu einer gemeinsamen Spitze verbunden sind. Die Spitze kann ein freies Ende des Rückhalteelements bilden. Um den Flossenstrahleffekt zweckmäßig zu realisieren, ist weiterhin in einer bevorzugten Ausführungsform vorgesehen, dass zwischen den Schenkelelementen mehrere Querstreben angeordnet sind. Vorzugsweise reduziert sich die Länge der Querstreben zur gemeinsamen Spitze hin. Mit anderen Worten weist die der gemeinsamen Spitze am nächsten gelegene Querstrebe eine Länge auf, die kleiner als die Länge der jeweils übrigen Querstreben ist. Insgesamt können die Querstreben daher im Querschnitt des Rückhalteelements sprossenartig zwischen den Schenkeln angeordnet sein. Vorzugsweise bildet das gesamte Rückhalteelement im Querschnitt eine leiterartige Struktur, wobei die Querstreben Sprossen der Leiter bilden und die Schenkelelemente die Seitenteile, die zu einer Spitze konvergieren.

Die Querstreben können bei dem erfindungsgemäßen Rückhalteelement parallel zueinander angeordnet sein. Alternativ können die Querstreben zueinander einen Winkel bilden. Insbesondere kann vorgesehen sein, dass die wenigstens eine Querstrebe mit beiden Schenkelelementen, die durch die Querstrebe miteinander verbunden sind, jeweils denselben Winkel einschließt. Die Querstrebe begrenzt somit mit den Schenkelelementen und der Spitze des Rückhalteelements ein gleichschenkliges Dreieck. Alternativ kann sich die Querstrebe schräg zwischen den Schenkelelementen erstrecken, so dass die Querstrebe mit den beiden Schenkelelementen, die durch die Querstrebe verbunden sind, unterschiedliche Winkel einschließt. Es können alle oder ein Teil der Querstreben mit den Schenkelelementen jeweils ein gleichschenkliges Dreieck bilden oder mit den Schenkelelementen unterschiedliche Winkel einschließen. Die vorgenannten Betrachtungsweisen beziehen sich jeweils auf den Querschnitt des Rückhalteelements.

In einer weiteren bevorzugten Ausführungsform des erfindungsgemäßen Rückhalteelements ist vorgesehen, dass die Abstände zwischen den Querstreben entlang eines rückseitigen Schenkelelements größer als entlang eines vorderseitigen Schenkelelements sind. In diesem Fall sind die Querstreben vorzugsweise winklig zueinander angeordnet. Insbesondere kann eine unterste Querstrebe mit den Schenkelelementen und der Spitze des Rückhalteelements ein gleichschenkliges Dreieck bilden. Eine unmittelbar darüber angeordnete Querstrebe kann einen schrägen Verlauf aufweisen, so dass der Abstand zwischen den Querstreben am vorderseitigen Schenkelelement kleiner als am rückseitigen Schenkelelement ist. Eine dritte Querstrebe, die oberhalb der beiden Querstreben angeordnet ist, kann einen größeren Winkel zur ersten Querstrebe aufweisen, so dass der Abstand zwischen der zweiten Querstrebe und der dritten Querstrebe entlang des vorderseitigen Schenkelelements kleiner als entlang des rückseitigen Schenkelelements ist. Es hat sich gezeigt, dass eine solche Struktur des Rückhalteelements besonders gut geeignet ist, um Aufprallkräfte adaptiv aufzunehmen.

In diesem Zusammenhang wird darauf hingewiesen, dass sich das Rückhalteelement als Teil eines Insassensicherheitssystems erfindungsgemäß derart in einem Fahrzeug auffaltet, dass das vorderseitige Schenkelelement einem Fahrzeuginsassen zugewandt ist und das rückseitige Schenkelelement von dem Fahrzeuginsassen abgewandt ist. Bei einem Aufprall taucht der Fahrzeuginsasse also in das vorderseitige Schenkelelement ein.

Ferner kann vorgesehen sein, dass jede Querstrebe jeweils eine einzelne Fluidkammer bildet, die fluiddicht mit den Schenkelelementen verbunden ist. Dabei können die Schenkelelemente aufblasbar oder nicht-aufblasbar gestaltet sein. Beispielsweise kann zwischen den Querstreben und den Schenkelelementen jeweils ein Abnäher angeordnet sein. Der Abnäher kann derart ausgebildet sein, dass eine Fluidverbindung zwischen den Querstreben und den Schenkelelementen gasdicht abgeschlossen ist. Es ist auch möglich, dass der Abnäher derart ausgebildet ist, dass zwischen den Querstreben und den Schenkelelementen die Fluidverbindung verjüngt ist. Insofern kann eine Fluidverbindung bestehen, die jedoch nur einen reduzierten Gasdurchfluss zwischen den Schenkelelementen und den Querstreben ermöglicht. Auf diese Weise kann die Art und Weise der Entfaltung des Rückhalteelements beeinflusst werden.

Vorzugsweise ist zwischen zwei benachbarten Querstreben wenigstens ein Freiraum vorgesehen, wobei eine Höhe des Freiraums um ein Vielfaches größer als eine Dicke der Querstreben und/oder der Schenkelelemente ist. Insbesondere kann die Höhe des Freiraums um ein Vielfaches größer als eine Dicke der Querstreben und/oder der Schenkelelemente im aufgeblasenen Zustand sein. Die Höhe des Freiraums und die Dicke der Querstreben bzw. Schenkelelemente werden vorzugsweise im Querschnitt des Rückhalteelements ermittelt. Dabei entspricht die Höhe des Freiraums dem Abstand zwischen zwei Querstreben zueinander oder dem Abstand zwischen der Spitze des Rückhalteelements und der ersten, der Spitze nächstliegenden Querstrebe des Rückhalteelements. Die Dicke der Querstreben und/oder der Schenkelelemente kann dem Durchmesser der Querstreben und/oder Schenkelelemente im aufgeblasenen Zustand entsprechen, wenn die Querstreben und/oder Schenkelelemente rohrförmig ausgebildet sind. In konkreten Ausführungsformen kann die Höhe des Freiraums um das wenigstens 5-fache, insbesondere um das wenigstens 10-fache, insbesondere um das wenigstens 20-fache, größer als die Dicke der Querstreben und/oder der Schenkelelemente sein. Dies gilt vorzugsweise für alle Freiräume innerhalb des Rückhalteelements. Vorzugsweise weisen alle Querstreben die gleiche Dicke auf. Ebenfalls können die Schenkelelemente identische Dicken aufweisen. Ferner kann vorgesehen sein, dass die Querstreben und/oder die Schenkelelemente eine einheitliche Dicke umfassen.

Die Schenkelelemente können direkt miteinander fluidverbunden sein, so dass sie eine V-förmige Fluidkammer bilden. Alternativ ist möglich, dass die Schenkelelemente jeweils separate Fluidkammern bilden. Außerdem kann zwischen den Schenkelelementen im Bereich der Spitze ein Abnäher angeordnet sein, der eine Fluidverbindung zwischen den Schenkelelementen verjüngt oder gasdicht abschließt.

Vorzugsweise sind die Querstreben mit den Schenkelelementen, insbesondere der V-förmigen Fluidkammer, derart fluidverbunden, dass das Rückhalteelement einen gemeinsamen Gassack bildet. Mit anderen Worten kann das Rückhalteelement insgesamt bzw. vollumfänglich aufblasbar sein. Zum Aufblasen des Rückhalteelements kann bei dieser Ausgestaltung ein einziger Gasgenerator ausreichend sein, so dass insgesamt die Anzahl der Bauteile eines Gassackmodules für ein solches Rückhalteelement reduziert ist.

In einem nebengeordneten Aspekt beruht die Erfindung auf dem Gedanken, ein adaptives, entfaltbares Rückhalteelement für ein Fahrzeugsicherheitssystem mit einer gerüstartigen Struktur mit einer oder mehreren Fluidkammern anzugeben, wobei die gerüstartige Struktur derart ausgebildet ist, dass das Rückhalteelement unter Einwirkung eines Kraftimpulses zumindest abschnittsweise eine gegen den Kraftimpuls gerichtete Bewegung und/oder Krümmung (Flossenstrahleffekt) erfährt.

Das Rückhalteelement kann insbesondere in der zuvor beschriebenen Art und Weise ausgebildet sein.

Ein weiterer nebengeordneter Aspekt der Erfindung betrifft ein Gassackmodul mit einem zuvor beschriebenen Rückhalteelement und einem Gasgenerator, der mit einer Querstrebe und/oder einem Schenkelelement und/oder einer Fluidkammer des Rückhalteelements fluidverbunden ist. Der Gasgenerator kann als Hybridgasgenerator mit einer Gaskartusche, oder als pyrotechnischer Gasgenerator mit zündfähigen, gaserzeugenden Feststoffen ausgebildet sein. Der Gasgenerator kann einstufig oder zweistufig ausgebildet sein. Vorzugsweise ist der Gasgenerator elektrisch aktivierbar und erzeugt eine ausreichend große Gasmenge, um das Rückhalteelement zu entfalten bzw. die Fluidkammern mit Gas zu füllen.

Die Erfindung bezieht sich außerdem auf ein Insassensicherheitssystem für ein Fahrzeug mit einem zuvor beschriebenen Rückhalteelement und/oder einem zuvor beschriebenen Gassackmodul. Bei dem erfindungsgemäßen Insassensicherheitssystem kann in bevorzugten Ausgestaltungen vorgesehen sein, dass das Rückhalteelement zwei Basisenden und eine den Basisenden gegenüberliegende Spitze aufweist, wobei die Basisenden ortsfest im Fahrzeug fixierbar oder fixiert sind und die Spitze in einem entfalteten Zustand des Rückhalteelements frei in einen Innenraum des Fahrzeugs ragt. Die Basisenden können insbesondere durch die Längsenden der Schenkelelemente gebildet sein. In konkreten Ausgestaltungen des Insassensicherheitssystems ist vorgesehen, dass das Rückhalteelement, insbesondere die Basisenden, mit einem Fahrzeugdach, insbesondere einem Dachhimmel, verbunden ist und sich im entfalteten Zustand in Richtung eines Fahrzeugbodens, insbesondere vertikal, durch den Innenraum des Fahrzeugs erstreckt. Auf diese Weise können insbesondere Fond-Insassen eines Fahrzeugs bei einem Aufprall gut geschützt werden.

In einer weiteren bevorzugten Ausgestaltung des Insassensicherheitssystems kann das Rückhalteelement, insbesondere die Basisenden, zwischen zwei in Fahrtrichtung nebeneinander angeordneten Sitzen, insbesondere in oder an einer Mittelkonsole, fixiert sein und sich im entfalteten Zustand quer über einen Sitz erstrecken. Eine solche Gestaltung ist insbesondere zum Schutz von Fahrer und Beifahrer eines Kraftfahrzeugs geeignet.

Ferner wird im Rahmen der vorliegenden Anmeldung die Verwendung des Flossenstrahleffekts in einem adaptiven Rückhalteelement zum Aufprallschutz für einen Fahrzeuginsassen offenbart und beansprucht, wobei das adaptive Rückhalteelement aufblasbare Schenkelelemente und/oder Querstreben umfasst. Das adaptive Rückhalteelement ist beispielsweise durch ein zuvor beschriebenes Rückhalteelement gebildet.

Die Erfindung wird im Folgenden anhand von Ausführungsbeispielen unter Bezugnahme auf die beigefügten, schematischen Zeichnungen näher erläutert. Darin zeigen:
Fig. 1 eine Querschnittsdarstellung eines erfindungsgemäßen Rückhalteelements nach einem bevorzugten Ausführungsbeispiel;
Fig. 2 eine perspektivische Ansicht des Rückhalteelements gemäß Fig. 1;
Fig. 3 eine perspektivische Ansicht eines erfindungsgemäßen Rückhalteelements gemäß einem weiteren bevorzugten Ausführungsbeispiel, wobei das Rückhälteelement eine gekrümmte Außenkontur aufweist;
Fig. 4 eine perspektivische Teilschnittansicht eines erfindungsgemäßen Rückhalteelements nach einem weiteren bevorzugten Ausführungsbeispiel, wobei das Rückhalteelement eine im Längsschnitt kreisförmige Außenkontur aufweist;
Fig. 5 eine Längsschnittsansicht eines Fahrzeugs mit dem erfindungsgemäßen Rückhalteelement gemäß Fig. 1, wobei das Rückhalteelement im Fahrzeugdach befestigt ist;
Fig. 6 eine Draufaufsicht auf ein Fahrzeug mit zwei Rückhalteelementen gemäß Fig. 1, die an einer Mittelkonsole fixiert sind;
Fig. 7 eine Innenansicht eines Fahrzeugs mit einem erfindungsgemäßen Rückhalteelement nach einem bevorzugten Ausführungsbeispiel, das am Fahrzeugdach befestigt ist;
Fig. 8 eine Gegenüberstellung des dynamischen Verhaltens erfindungsgemäßer Rückhalteelemente mit unterschiedlicher gerüstartiger Struktur unter Krafteinwirkung im zeitlichen Verlauf;
Fig. 9a eine Längsschnittsansicht eines Fahrzeugs mit einem erfindungsgemäßen Rückhalteelement gemäß Fig. 1, wobei das Rückhalteelement am Fahrzeugboden befestigt ist und sich entlang der Seitentüren erstreckt;
Fig. 9b eine Querschnittsansicht durch das Fahrzeug gemäß Fig. 9a mit mehreren möglichen Einbaulagen eines Rückhalteelements gemäß Fig. 1, das am Fahrzeugboden verankert ist;
Fig. 10a eine Längsschnittsansicht eines Fahrzeugs mit einem erfindungsgemäßen Rückhalteelement gemäß Fig. 1, wobei das Rückhalteelement im Dach befestigt ist und sich entlang der Seitenfenster des Fahrzeugs erstreckt;
Fig. 10b eine Querschnittsansicht durch das Fahrzeug gemäß Fig. 10a mit verschiedenen Einbaumöglichkeiten des Rückhalteelements; und
Fig. 11 eine Draufsicht auf ein Fahrzeug mit weiteren möglichen Einbaulagen eines erfindungsgemäßen Rückhalteelements.

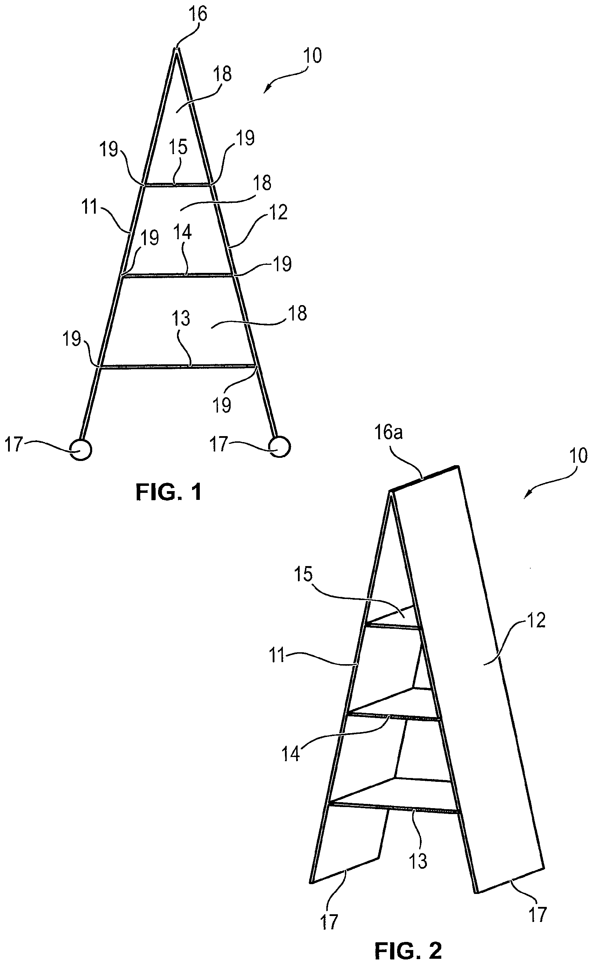

In den Fig. 1 und 2 ist schematisch ein Rückhalteelement 10 gezeigt, das in einem Fahrzeugsicherheitssystem einsetzbar ist. Das Rückhalteelement 10 ist vorzugsweise Teil der passiven Fahrzeugsicherheit und im nicht-aktivierten Zustand verdeckt am bzw. im Fahrzeug verbaut. Das Rückhalteelement 10 ist entfaltbar, so dass es im Falle eines Unfalls wirksam werden kann. Das Rückhalteelement 10 ist zudem insofern adaptiv, als dass es sich an unterschiedliche Aufprallszenarien anpassen kann. Unterschiedliche Aufprallszenarien entstehen insbesondere durch unterschiedliche Aufprallgeschwindigkeiten und/oder Größe bzw. Masse (Gewicht) des zu schützenden Fahrzeuginsassen 30.

Das Rückhalteelement 10 umfasst zwei Schenkelelemente 11, 12, die V-förmig zueinander angeordnet sind. Insbesondere konvergieren die Schenkelelemente 11, 12 zueinander und bilden eine Spitze 16. Die Schenkelelemente 11, 12 sind im Bereich der Spitze miteinander verbunden. Zwischen den Schenkelelementen 11, 12 erstrecken sich Querstreben 13, 14, 15, die die Schenkelelemente 11, 12 miteinander verbinden. In der Querschnittsansicht gemäß Fig. 1 ist gut erkennbar, dass die Querstreben 13, 14, 15 sprossenartig zwischen den Schenkelelementen 11, 12 angeordnet sind. Insgesamt bildet das Rückhalteelement 10 somit im Querschnitt eine leiterartige Struktur mit sprossenartigen Querstreben 13, 14, 15, deren Länge sich zur Spitze 16 hin reduziert.

In Fig. 1 sind an den Längsenden der Schenkelelemente 11, 12 Basisenden 17 hervorgehoben. Die Basisenden 17 liegen der Spitze 16 des Rückhalteelements 10 gegenüber. Im montierten Zustand des Rückhalteelements innerhalb eines Fahrzeugs 20 sind die Basisenden 17 ortsfest an einem Fahrzeugbauteil verankert. Eine Relativbewegung zwischen den Basisenden 17 wird so vermieden.

In den Fig. 1-4 sind die Schenkelelemente 11, 12 und die Querstreben 13, 14, 15 der Einfachheit halber schematisch als Striche oder Flächen dargestellt. Tatsächlich ist vorgesehen, dass die Querstreben 13, 14, 15 und/oder die Schenkelelemente 11, 12 aufblasbar ausgebildet sind. So können die Schenkelelemente 11, 12 im Bereich der Spitze 16 miteinander fluidverbunden sein, und eine gemeinsame Fluidkammer bilden. Zusätzlich können die Querstreben 13, 14, 15 separate Fluidkammern oder mit der gemeinsamen Fluidkammer der Schenkelelemente 11, 12 verbundene Fluidkammern bilden. Insbesondere kann vorgesehen sein, dass in den Verbindungsbereichen 19 zwischen den Querstreben 13, 14, 15 und den Schenkelelementen 11, 12 Abnäher angeordnet sind, um die durch die Schenkelelemente 11, 12 und die Querstreben 13, 14, 15 gebildeten Fluidkammern voneinander zu trennen, insbesondere um einen Fluidaustausch zwischen den einzelnen Fluidkammern zu vermeiden.

Wie in Fig. 2 gut erkennbar ist, weist das Rückhalteelement 10 eine Längserstreckung auf, so dass die im Querschnitt als Spitze erkennbare Verbindung zwischen den Schenkelelementen 11, 12 einen Grat 16a bildet. Der Grat 16a verläuft in Längsrichtung des Rückhalteelements 10. Bei dem Ausführungsbeispiel gemäß Fig. 1 und 2 sind die Querstreben 13, 14, 15 parallel zueinander angeordnet und bilden im Querschnitt jeweils mit den Schenkelelementen 11, 12 ein gleichschenkliges Dreieck. Mit anderen Worten ist der Winkel in den Verbindungsbereichen 19 zwischen den einzelnen Querstreben 13, 14, 15 und den Schenkelelementen 11, 12 jeweils gleich. Dabei sind in der hier gezeigten konkreten Ausgestaltung drei Querstreben 13, 14, 15 ausgebildet, wobei eine erste Querstrebe 13 von der Spitze 16 bzw. dem Grat 16 des Rückhalteelements 10 weiter entfernt ist als eine dritte Querstrebe 15, die der Spitze 16 bzw. dem Grat 16a am nächsten angeordnet ist. Zwischen der ersten Querstrebe 13 und der dritten Querstrebe 15 erstreckt sich eine zweite Querstrebe 14. Der Abstand zwischen den Querstreben 13, 14, 15 ist bei dem dargestellten Ausführungsbeispiel im Wesentlichen gleich. Es ist auch möglich, dass die Abstände zwischen den Querstreben 13, 14, 15 unterschiedlich sind. Die Abstände zwischen den Querstreben 13, 14, 15, bilden Freiräume 18, die im aufgeblasenen Zustand des Rückhalteelements 10 vorzugsweise durch Umgebungsluft gefüllt sind. Dabei ist bevorzugt vorgesehen, dass die Freiräume 18 jeweils eine Höhe aufweisen, die größer als die Dicke der Querstreben 13, 14, 15 und/oder der Schenkelelemente 11, 12 ist. Die Dicke der Querstreben 13, 14, 15 und der Schenkelelemente 11, 12 wird vorzugsweise im Querschnitt des Rückhalteelements 10 ermittelt. Bei rohrförmigen Schenkelelementen 11, 12 und/oder rohrförmigen Querstreben 13, 14, 15 entspricht die Dicke dem jeweiligen Querschnittsdurchmesser. Die Höhe der Freiräume 18 wird ebenfalls durch den Querschnitt des Rückhalteelements 10 ermittelt und entspricht im Wesentlichen dem Abstand zwischen zwei Querstreben 13, 14, 15 bzw. dem Abstand zwischen der dritten Querstrebe 15 und der Spitze 16 bzw. dem Grat 16a des Rückhalteelements.

Bei dem Rückhalteelement gemäß Fig. 1 und 2 kann beispielsweise vorgesehen sein, dass nur die Querstreben 13, 14, 15 aufblasbar sind, wogegen die Schenkelelemente 11, 12 eine Stoffbahn umfassen, die zwischen den Querstreben 13, 14, 15 angeordnet ist. Es ist auch möglich, dass die Schenkelelemente zumindest abschnittsweise aufblasbar sind. Beispielsweise können die Kanten an den Längsenden des Rückhalteelements 10 durch rohrförmige, aufblasbare Abschnitte der Schenkelelemente 11, 12 gebildet sein, wobei sich zwischen den aufblasbaren Abschnitten der Schenkelelemente 11, 12 textile, insbesondere flexible, Stoffbahnen erstrecken, die mit den Querstreben 13, 14, 15 verbunden sind.

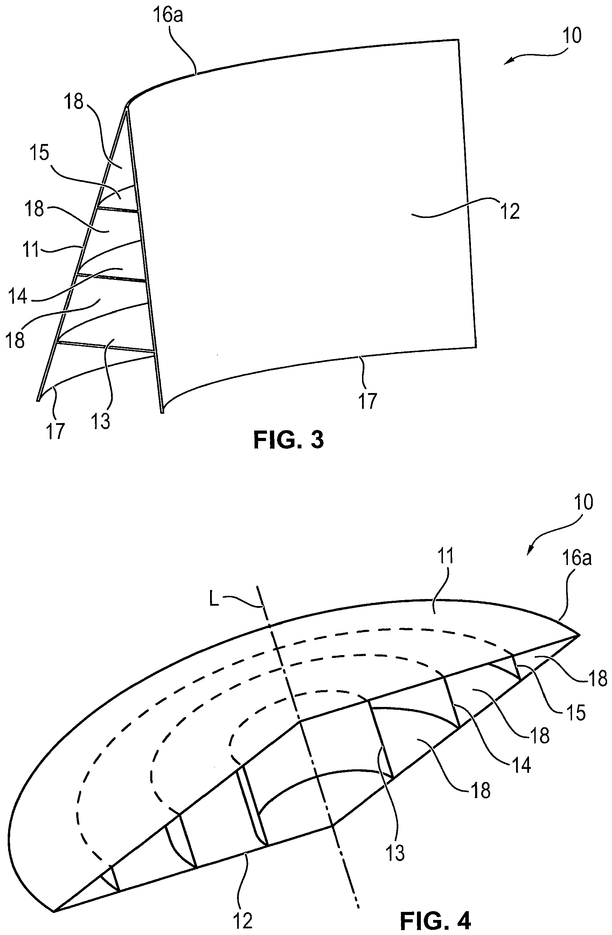

Das Ausführungsbeispiel gemäß Fig. 3 ähnelt dem Ausführungsbeispiel gemäß Fig. 1 und 2, insbesondere hinsichtlich der Querschnittstruktur des Rückhalteelements 10. Insbesondere weist das Rückhalteelement 10 eine Querschnittsgeometrie auf, die im Wesentlichen der Querschnittsgeometrie gemäß Fig. 1 entspricht. Im Unterschied zu dem Ausführungsbeispiel gemäß Fig. 2 weist das Rückhalteelement 10 gemäß Fig. 3 eine im Längsschnitt gekrümmte Außenkontur auf. Dabei bildet ein auf der Außenseite der Krümmung angeordnetes Schenkelelement 11 ein vorderseitiges Schenkelelement 11, wobei ein auf der Innenseite der Krümmung angeordnetes Schenkelelement 12 ein rückseitiges Schenkelelement 12 bildet. Eine umgekehrte Definition des vorderseitigen Schenkelelements 11 und des rückseitigen Schenkelelements 12 ist möglich. Jedenfalls ist vorgesehen, dass das vorderseitige Schenkelelement 11 im Einbauzustand innerhalb eines Fahrzeugs einem Fahrzeuginsassen 30 zugewandt ist, wogegen ein rückseitiges Schenkelelement 12 im Einbauzustand einem Fahrzeuginsassen 30 abgewandt ist. Die Krümmung des Rückhalteelements 10 gemäß Fig. 3 ist gut an dem Grat 16a erkennbar, der in Längsrichtung des Rückhalteelements 10 gekrümmt, insbesondere bogenförmig gekrümmt, verläuft.

Fig. 4 zeigt ein alternatives Ausführungsbeispiel des Rückhalteelements 10. Das Rückhalteelement 10 umfasst dabei zwei Schenkelelemente 11, 12, die jeweils abschnittsweise V-förmig zueinander angeordnet sind und eine Spitze 16 bzw. einen Grat 16a bilden. Die Querschnittskontur des Rückhalteelements 10 gemäß Fig. 4 entspricht im Wesentlichen der Querschnittskontur gemäß Fig. 1, die um eine Rotationsachse L gedreht ist. Insofern bildet das Rückhalteelement 10 im Längsschnitt eine rotationssymmetrische bzw. eine kreisförmige Außenkontur. Insbesondere weist der Grat 16a einen kreisförmigen Verlauf auf. Insofern ist am Außenrand des Rückhalteelements 10 ein umlaufender Grat 16a gebildet.

Die Querstreben 13, 14, 15 des Rückhalteelements 10 erstrecken sich analog zu der Querschnittsgeometrie gemäß Fig. 1 parallel zueinander zwischen den Schenkelelementen 11, 12 und verbinden diese. Durch die rotationssymmetrische Gestaltung des Rückhalteelements 10 gemäß Fig. 4 weisen die Querstreben 13, 14, 15 jedoch insgesamt eine ringförmige Gestalt auf. Die ringförmig gestalteten Querstreben 13, 14, 15 sind konzentrisch bezüglich der Rotationsachse L zueinander angeordnet und weisen unterschiedliche Ringdurchmesser auf. Zwischen den Querstreben 13, 14, 15 sind Freiräume 18 gebildet, die durch die Schenkelelemente 11, 12 bedeckt sind. Insbesondere sind die Freiräume 18 durch die Querstreben 13, 14, 15 und die Schenkelelemente 11, 12 geschlossen. Um eine Entfaltung des Rückhalteelements 10 zu ermöglichen, ist daher vorgesehen, dass in den Schenkelelementen 11, 12 Lufteinlassöffnungen angeordnet sind, so dass Umgebungsluft in die Freiräume 18 eindringen kann. Die Lufteinlassöffnungen sind in Fig. 4 aus Übersichtlichkeitsgründen nicht dargestellt.

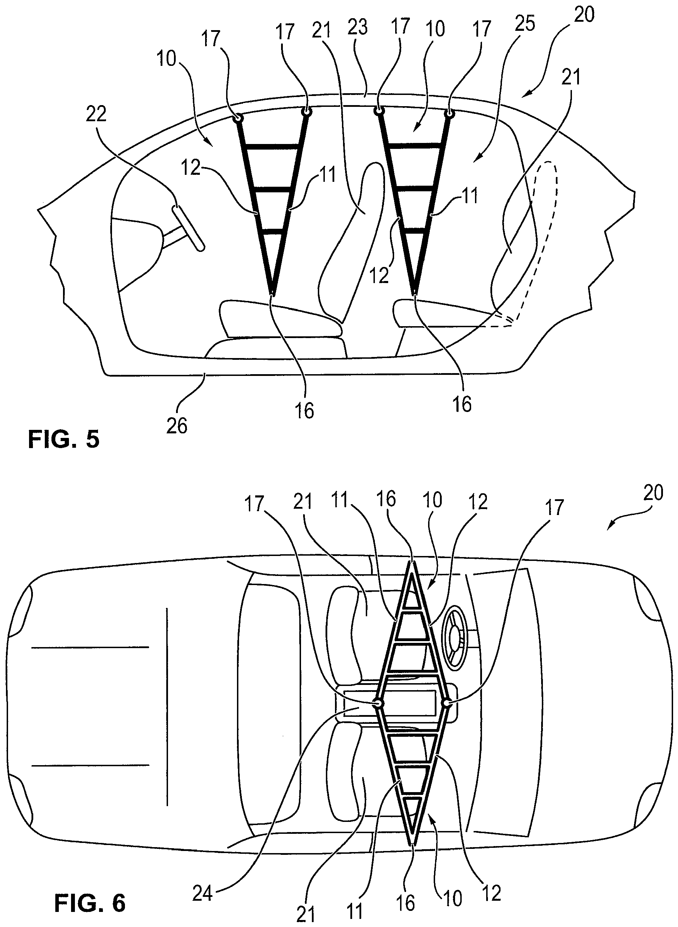

In Fig. 5 ist eine bevorzugte Einbaulage des Rückhalteelements 10 gemäß Fig. 1 und 2 dargestellt. Insbesondere zeigt Fig. 5 eine Seitenansicht eines Fahrzeugs 20 mit Sitzen 21, einem Lenkrad 22 und einem Fahrzeugdach 23. Die Sitze 21 sind mit einem Fahrzeugboden 26 verbunden. Bei dem dargestellten Ausführungsbeispiel sind Rückhalteelemente 10 sowohl für die vorderen Fahrzeuginsassen 30, als auch für die hinteren Fahrzeuginsassen 30 vorgesehen. Die Rückhalteelemente 10 sind mit ihren Basisenden 17 am Fahrzeugdach 23 befestigt bzw. im Dachhimmel verankert. Im entfalteten Zustand, d.h. nach Aktivierung des Rückhalteelements 10, erstrecken sich die Rückhalteelemente 10 im Wesentlichen vertikal durch den Innenraum 25 des Fahrzeugs 20. Dabei zeigt die Spitze 16 bzw. der Grat 16a in Richtung des Fahrzeugbodens 26. Die Rückhalteelemente 10 entfalten sich vorzugsweise derart auf Höhe von oder vor den Sitzen 21, dass bei einem Frontalaufprall ein Fahrzeuginsasse 30 durch das Rückhalteelement 10 aufgefangen wird. Die Rückhalteelemente 10 weisen insgesamt eine Höhe auf, die ausreicht, um wenigstens den Kopf 31 eines Fahrzeuginsassen 30 aufzufangen.

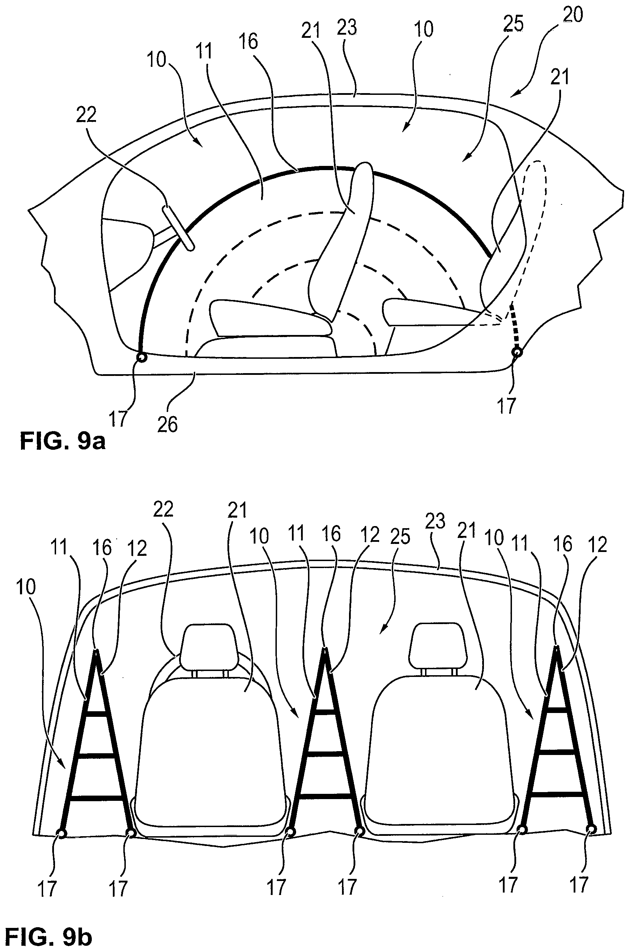

Das Rückhalteelement 10 kann auch als Seitenairbag oder Windowbag genutzt werden. Das Rückhalteelement 10 kann insbesondere an den Fensterseiten eines Fahrzeugs 20 bzw. entlang der Seitentüren positioniert werden. Fig. 9a zeigt ein Ausführungsbeispiel, bei dem das Rückhalteelement 10 mit seinen Basisenden 17 am Fahrzeugboden 26 fixiert ist. Im entfaltenden Zustand bzw. nach Aktivierung des Rückhalteelements 10 erstreckt sich dieses im Wesentlichen senkrecht nach oben entlang der Seitentüren. Es ist auch möglich, dass ein derartiges Rückhalteelement, welches am Fahrzeugboden 26 verankert ist, zwischen den Sitzen bzw. den Insassen entfaltet wird, um beispielsweise einen Kontakt der nebeneinander sitzenden Fahrzeuginsassen miteinander im Fall eines Unfalls zu verhindern. Die möglichen Positionierungen des Rückhalteelements 10 sind beispielhaft in Fig. 9b dargestellt. Dabei zeigt Fig. 9b eine Querschnittsansicht durch ein Fahrzeug 20. Die im entfaltenden Zustand dargestellten Rückhalteelemente 10 erstrecken sich jeweils zwischen den Seitenwänden bzw. Seitentüren 27 und den Fahrzeugsitzen 21 bzw. zwischen den Fahrzeugsitzen 21. Es wird darauf hingewiesen, dass die Darstellung gemäß Fig. 9b lediglich die möglichen Positionierungen des Rückhalteelements 10 in einem Fahrzeug 20 darstellt. Es ist durchaus möglich, dass nur an den Seitentüren 27 oder nur zwischen den Sitzen 21 ein Rückhalteelement 10 zu sehen ist.

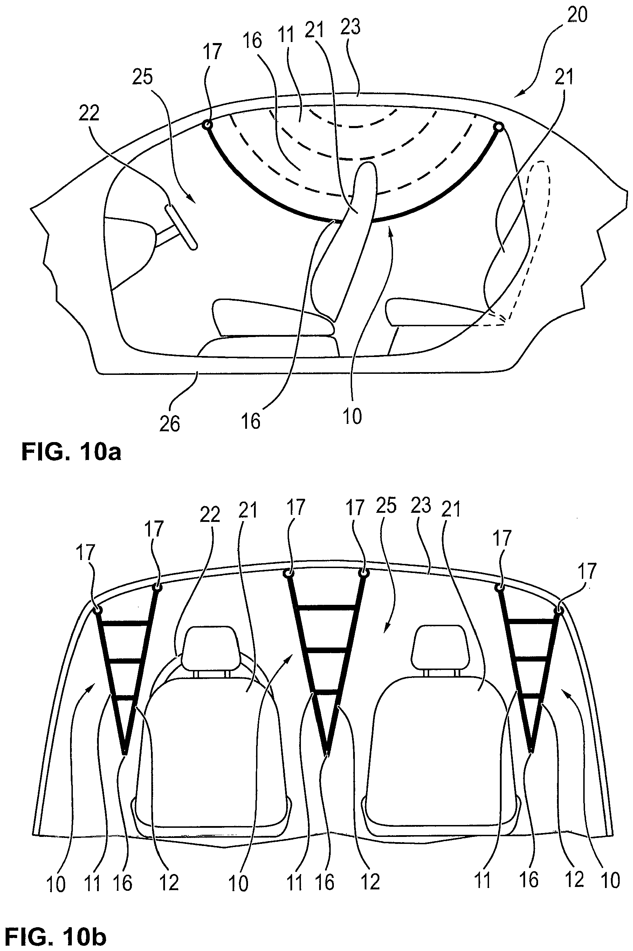

Alternativ können sich die Rückhalteelemente 10, die zwischen den Sitzen 21 oder zwischen den Seitentüren 21 und den Sitzen 21 angeordnet sind, auch vom Fahrzeugdach 23 ausgehend entfalten. Eine derartige Variante ist beispielhaft in den Figuren 10a und 10b gezeigt. Dabei stellt Fig. 10a eine Seitenansicht eines Fahrzeugs 20 dar, wobei sich das Rückhalteelement 10, das mit seinen Basisenden 17 am Fahrzeugdach 23 befestigt bzw. im Dachhimmel verankert ist, über die Seitenfenster des Fahrzeugs 20 spannt. Im inaktivierten Zustand ist das Rückhalteelement 10 vorzugsweise vollständig im Dachhimmel versenkt und insofern nicht unmittelbar für einen Fahrzeuginsassen erkennbar. Fig. 10b zeigt im Wesentlichen analog zu Fig. 9b in einer Querschnittsansicht des Fahrzeugs 20 die unterschiedlichen Möglichkeiten der Positionierung des Rückhalteelements 10. Insbesondere ist vorgesehen, das sich das Rückhalteelement 10 zwischen den Seitenfenstern und den Sitzen 21 und/oder zwischen den Sitzen 21 vom Fahrzeugdach 23 ausgehend in Richtung des Fahrzeugbodens 26 erstrecken kann.

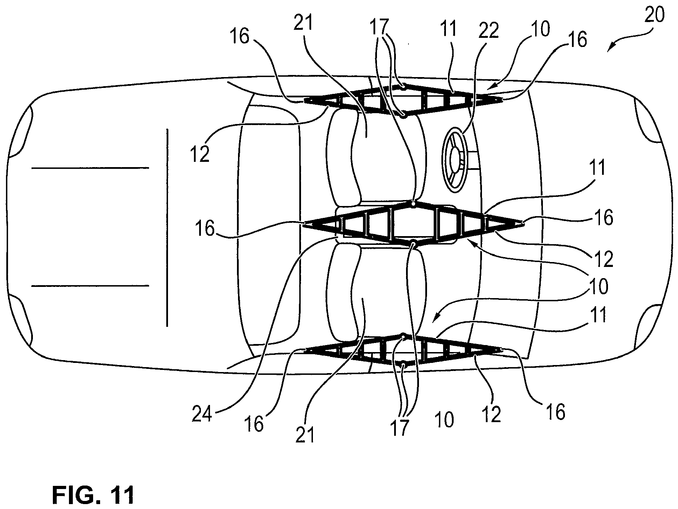

Fig. 11 zeigt eine Draufsicht auf das Fahrzeug 20 und illustriert die in den Querschnittsansichten und Seitenansichten gemäß Figuren 9a bis 9b erläuterten Einbaumöglichkeiten des Rückhalteelements 10. Es ist erkennbar, dass das Rückhalteelement 10 einerseits zwischen den Seitentüren 27 und einem Fahrzeugsitz 21 und/oder zwischen den Fahrzeugsitzen 21 angeordnet sein kann. Das Rückhalteelement 10 erstreckt sich dabei entweder vom Fahrzeugboden 26 aus oder ist im Fahrzeugdach 23 verankert und erstreckt sich in Richtung des Fahrzeugbodens 26. Im Allgemeinen ist vorgesehen, dass die Einbaulagen, die in Figuren 9a bis 11 dargestellt sind, dem Rückhalteelement 10 die Funktion eines Seitenairbags oder eines Windowbags verleihen. In diesen Fällen dient das Rückhalteelement 10 also zum Schutz der Fahrzeuginsassen bei einem Seitenaufprall.

In Fig. 6 ist eine alternative Einbaulage des Rückhalteelements gemäß Fig. 1 und 2 gezeigt. Dabei ist ein Fahrzeug 20 in einer Draufsicht gezeigt, wobei das Fahrzeug 20 Sitze 21 und eine zwischen den Sitzen 21 angeordnete Mittelkonsole 24 aufweist. Die Mittelkonsole 24 beherbergt Rückhalteelemente 10, die jeweils für den Fahrer bzw. Beifahrer des Fahrzeugs 20 vorgesehen sind. Dabei sind die Rückhalteelemente 10 mit ihren Basisenden 17 fest in oder an der Mittelkonsole 24 fixiert und erstrecken sich nach Aktivierung im aufgeblasenen Zustand quer zur Fahrzeuglängsachse in Richtung der Seitentüren 27 des Fahrzeugs 20. Dabei entfaltet sich das Rückhalteelement 10 vorzugsweise zwischen dem Sitz 21 bzw. einer Sitzlehne und dem Lenkrad 22 bzw. einem Armaturenbrett, so dass eine Kollision der Fahrzeuginsassen 30 mit dem Lenkrad und/oder dem Armaturenbrett vermieden wird.

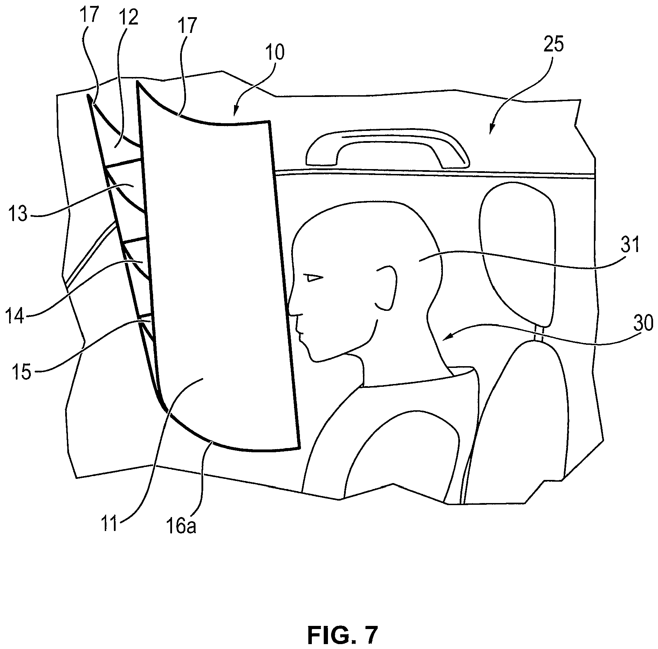

Die Anordnung eines Rückhalteelements 10 mit Bezug auf einen Fahrzeuginsassen 30 ist gut in Fig. 7 erkennbar. Das darin gezeigte Rückhalteelement 10 ist mit seinen Basisenden 17 am Fahrzeugdach 23 fixiert und erstreckt sich im dargestellten aktivierten Zustand vertikal in Richtung des Fahrzeugbodens 26. Dabei kommt das Rückhalteelement 10 vor dem Kopf 31 des Fahrzeuginsassen 30 zu liegen, so dass der bei einem Frontalaufprall nach vorne schnellende Kopf 31 des Fahrzeuginsassen 30 durch das Rückhalteelement 10 aufgefangen wird.

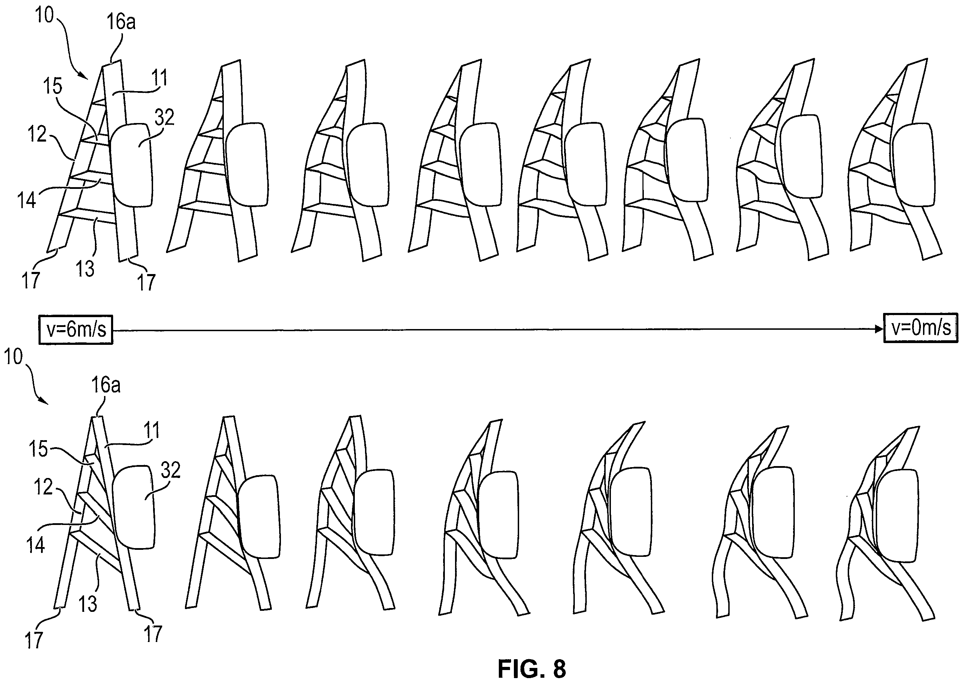

Fig. 8 zeigt schematisch den zeitlichen Verlauf der Verformung von erfindungsgemäßen Rückhalteelementen 10 unter Einwirkung einer Aufprallmasse 32, die den Aufprall eines Fahrzeuginsassen 30 auf das Rückhalteelement 10 simuliert. Dabei sind zwei unterschiedliche, geometrische Querschnittsgestaltungen des Rückhalteelements 10 in den Vergleich gesetzt. In der oberen Zeichnungshälfte der Fig. 8 ist die Verformung eines Rückhalteelements 10 gezeigt, das gemäß dem Ausführungsbeispiel nach Fig. 1 und 2 gestaltet ist. Die untere Zeichnungshälfte zeigt ein Rückhalteelement 10, das einen ähnlichen Aufbau aufweist, sich jedoch dadurch von dem Rückhalteelement 10 gemäß Fig. 1 und 2 unterscheidet, als dass die Querstreben 13, 14, 15 nicht-parallel zueinander ausgerichtet sind. Vielmehr sind die Querstreben 13, 14, 15 winklig zueinander angeordnet, so dass der Abstand zwischen der ersten Querstrebe 13 und der zweiten Querstrebe 14 sowie zwischen der zweiten Querstrebe 14 und der dritten Querstrebe 15 entlang des vorderseitigen Schenkelelements 11 kleiner als entlang des rückseitigen Schenkelelements 12 Ist.

In Fig. 8 ist außerdem die ursprüngliche Aufprallgeschwindigkeit der Aufprallmasse 32 auf das Rückhalteelement 10 mit 6 m/s angegeben. Das Rückhalteelement 10 verformt sich durch die Einwirkung der Aufprallmasse 32, so dass deren Vorwärtsbewegung verzögert wird, bis die Aufprallmasse 32 zum Stillstand kommt (V = 0 m/s). Für beide Varianten eines Rückhalteelements 10 gemäß Fig. 8 ist gut erkennbar, dass sich durch den im Wesentlichen mittigen Kontakt der Aufprallmasse 32 mit dem Rückhalteelement 10 eine Verformung des Rückhalteelements 10 einstellt, die zu einer entgegen der Aufprallrichtung gerichteten Bewegung der Spitze 16 führt. Dies entspricht dem Flossenstrahleffekt. Gut erkennbar ist auch, dass durch diese Gegenbewegung der Spitze 16 des Rückhalteelements 10 sich das Rückhalteelement 10 an die Form der Aufprallmasse 32 anpasst. Im Wesentlichen wird die Aufprallmasse 32 zumindest teilweise von dem Rückhalteelement 10 umschlossen. Damit wird erreicht, dass die Aufprallmasse 32 in ihrer Bewegungsrichtung geführt wird. Ein Ausweichen der Aufprallmasse 32 wird so vermieden. Insgesamt ergibt sich damit sehr effiziente Schutzfunktion des Rückhalteelements 10.

Anhand des Vergleichs der unterschiedlich geometrisch gestalteten Rückhalteelemente 10 in Fig. 8 ist ebenfalls erkennbar, dass durch die Ausrichtung von Querstreben 13, 14, 15 und Schenkelelementen 11, 12 zueinander das aktive Verformungsverhalten des Rückhalteelements 10 eingestellt werden kann. So kann auf unterschiedliche Bedürfnisse verschiedener Fahrzeughersteller eingegangen werden, wobei das Grundkonzept des Flossenstrahleffekts beibehalten wird. Die erfindungsgemäßen Vorteile sind somit auf eine Vielzahl von unterschiedlichen Fahrzeuginsassensicherheitssystemen anwendbar.

Im Allgemeinen kann das Rückhalteelement 10 wegen der funktionalen Ähnlichkeit als Airbag bezeichnet werden. Strukturell unterscheidet sich das Rückhalteelement jedoch von herkömmlichen Airbags, da die Aufnahme der Aufprallenergie nicht hauptsächlich durch Gasverdrängung erfolgt, sondern durch die mechanische bzw. kinematische Verformung des Rückhalteelements 10 selbst. Generell ist das Rückhalteelement 10 für alle Anwendungen geeignet, die bisherige Airbags erfüllen. Insbesondere kann das Rückhalteelement 10 als Beifahrer-Airbag, als Fahrer-Airbag, als Dach-Airbag, als Seiten-Airbag, als Fenster-Airbag (window bag) und/oder als Fußgängerschutz-Airbag eingesetzt werden. Die innerhalb des Rückhalteelements 10 gebildeten Fluidkammern, die sowohl in den Querstreben 13, 14, 15, als auch in den Schenkelelementen 11, 12 ausgebildet sein können, sind vorzugsweise mit einem gemeinsamen oder jeweils separaten Gasgeneratoren verbunden. Bei Verwendung mehrerer Gasgeneratoren für ein einziges Rückhalteelement 10 können diese in vorbestimmten Zeitabständen angesteuert bzw. aktiviert werden, um eine weitere Adaptierbarkeit des Rückhalteelements 10 zu ermöglichen. Schließlich können in den Fluidkammern Auslassöffnungen vorgesehen sein, um auch über die Änderung des Gasdrucks innerhalb der Fluidkammern eine zusätzliche Adaptierbarkeit zu realisieren.

Durch die gerüstartige Struktur des Rückhalteelements 10 bzw. durch die Umsetzung des Flossenstrahleffekts in dem Rückhalteelement 10, verhält sich das Rückhalteelement 10 selbsttätig adaptiv. Das bedeutet, dass sich das Rückhalteelement 10 selbsttätig an ein Aufprallszenario anpasst, ohne dass zusätzliche Aktuatoren, beispielsweise auslösbare Schnittmesser zum Durchschneiden von Fangbändern innerhalb eines Gassacks, eingesetzt werden müssen.

### Bezugszeichenliste

- 10: Rückhalteelement
- 11: Vorderseitiges Schenkelelement
- 12: Rückseitiges Schenkelelement
- 13: Erste Querstrebe
- 14: Zweite Querstrebe
- 15: Dritte Querstrebe
- 16: Spitze
- 16a: Grat
- 17: Basisende
- 18: Freiraum
- 19: Verbindungsbereich

## Patentansprüche

1. Adaptives, entfaltbares Rückhalteelement (10) für ein Fahrzeugsicherheitssystem zum Schutz eines Fahrzeuginsassen in einem Fahrzeug mit wenigstens zwei zumindest abschnittsweise im Wesentlichen v-förmig zueinander angeordneten Schenkelelementen (11, 12) mit jeweils einem Basisende (17) und einer dem Basisende (17) gegenüberliegenden Spitze (16), zwischen denen mindestens eine Querstrebe (13, 14, 15) angeordnet ist, die die Schenkelelemente (11, 12) verbindet, wobei die Schenkelelemente und/oder die Querstrebe (13, 14, 15) aufblasbar sind bzw. ist, **dadurch gekennzeichnet, dass** die Basisenden (17) ortsfest im Fahrzeug (20) fixierbar oder fixiert sind, und dass die Schenkelelemente (11, 12) so angeordnet sind, dass sie ein vorderseitiges Schenkelelement (11) und ein rückseitiges Schenkelelement (12) bilden, von denen das vorderseitige Schenkelelement (11) dem Fahrzeuginsassen zugewandt ist und das rückseitige Schenkelelement (12) von dem Fahrzeuginsassen abgewandt ist.

2. Rückhalteelement (10) nach Anspruch 1,
**dadurch gekennzeichnet, dass**
das Rückhalteelement (10) eine im Querschnitt dreieckförmige oder rautenförmige Außenkontur aufweist.

3. Rückhalteelement (10) nach Anspruch 1 oder 2,
**dadurch gekennzeichnet, dass**
das Rückhalteelement eine im Längsschnitt kreisförmige oder ovale oder länglich gekrümmte Außenkontur aufweist.

4. Rückhalteelement (10) nach einem der vorhergehenden Ansprüche,
**dadurch gekennzeichnet, dass**
die Schenkelelemente (11, 12) durch eine textile, insbesondere flexible, Stoffbahn oder durch mehrere miteinander verbundene textile, insbesondere flexible, Stoffbahnen gebildet sind.

5. Rückhalteelement (10) nach einem der vorhergehenden Ansprüche,
**dadurch gekennzeichnet, dass**
die Schenkelelemente (11, 12) zu einer gemeinsamen Spitze (16) konvergieren.

6. Rückhalteelement (10) nach Anspruch 5,
**dadurch gekennzeichnet, dass**
zwischen den Schenkelelementen (11, 12) mehrere Querstreben (13, 14, 15) angeordnet sind, wobei
sich die Länge der Querstreben (13, 14, 15) zur gemeinsamen Spitze (16) hin reduziert.

7. Rückhalteelement (10) nach Anspruch 6,
**dadurch gekennzeichnet, dass**
die Querstreben (13, 14, 15) im Querschnitt des Rückhalteelements (10) sprossenartig zwischen den Schenkelelementen (11, 12) angeordnet sind.

8. Rückhalteelement (10) nach Anspruch 6 oder 7,
**dadurch gekennzeichnet, dass**
die Querstreben (13, 14, 15) parallel zueinander angeordnet sind.

9. Rückhalteelement (10) nach einem der Ansprüche 6 bis 8,
**dadurch gekennzeichnet, dass**
die Abstände zwischen den Querstreben (13, 14, 15) entlang eines rückseitigen Schenkelelements (12) größer als entlang eines vorderseitigen Schenkelelements (11) sind.

10. Rückhalteelement (10) nach einem der Ansprüche 6 bis 9,
**dadurch gekennzeichnet, dass**
zwischen zwei benachbarten Querstreben (13, 14, 15) wenigstens ein Freiraum (18) vorgesehen ist, wobei eine Höhe des Freiraums (18) um ein Vielfaches größer als eine Dicke der Querstreben (13, 14, 15) und/oder der Schenkelelemente (11, 12) ist.

11. Rückhalteelement (10) nach einem der vorhergehenden Ansprüche,
**dadurch gekennzeichnet, dass**
jede Querstrebe (13, 14, 15) jeweils eine einzelne Fluidkammer bildet, die fluiddicht mit den Schenkelelementen (11, 12) verbunden ist.

12. Rückhalteelement (10) nach einem der vorhergehenden Ansprüche,
**dadurch gekennzeichnet, dass**
zwischen den Querstreben (13, 14, 15) und den Schenkelelementen (11, 12) jeweils ein Abnäher angeordnet ist derart, dass eine Fluidverbindung zwischen den Querstreben (13, 14, 15) und den Schenkelelementen (11, 12) verjüngt oder gasdicht abgeschlossen ist.

13. Rückhalteelement (10) nach einem der vorhergehenden Ansprüche,
**dadurch gekennzeichnet, dass**
die Schenkelelemente (11, 12) direkt miteinander fluidverbunden sind derart, dass sie eine v-förmige Fluidkammer bilden.

14. Rückhalteelement (10) nach einem der Ansprüche 1 bis 10 oder 13,
**dadurch gekennzeichnet, dass**
die mindestens eine Querstrebe bzw. die Querstreben (13, 14, 15) mit den Schenkelelementen (11, 12), insbesondere der v-förmigen Fluidkammer, fluidverbunden sind derart, dass das Rückhalteelement (10) einen gemeinsamen Gassack bildet.

15. Adaptives, entfaltbares Rückhalteelement (10) für ein Fahrzeugsicherheitssystem mit einer gerüstartigen Struktur mit einer oder mehreren Fluidkammern, wobei die gerüstartige Struktur derart ausgebildet ist, dass das Rückhalteelement (10) unter Einwirkung eines Kraftimpulses von außen auf das Rückhalteelement, zumindest abschnittsweise eine gegen den Kraftimpuls gerichtete Bewegung und/oder Krümmung nach dem Flossenstrahleffekt ausübt, wobei das Rückhalteelement (10) gemäß einem der Ansprüche 1 bis 14 ausgebildet ist.

16. Gassackmodul mit einem Rückhalteelement (10) nach einem der vorhergehenden Ansprüche und einem Gasgenerator, der mit einer Querstrebe (13, 14, 15) und/oder einem Schenkelelement (11, 12) und/oder einer Fluidkammer des Rückhalteelements (10) fluidverbunden ist.

17. Fahrzeugsicherheitssystem für ein Fahrzeug (20) mit einem Rückhalteelement (10) und/oder einem Gassackmodul nach einem der vorhergehenden Ansprüche.

18. Fahrzeugsicherheitssystem nach Anspruch 17,
**dadurch gekennzeichnet, dass**
das Rückhalteelement (10) zwei Basisenden (17) und eine den Basisenden gegenüberliegende Spitze (16) aufweist, wobei die Basisenden (17) ortsfest im Fahrzeug (20) fixierbar oder fixiert sind und die Spitze (16) in einem entfalteten Zustand des Rückhalteelements (10) frei in einen Innenraum (25) des Fahrzeugs (20) ragt.

19. Fahrzeugsicherheitssystem nach Anspruch 17 oder 18,
**dadurch gekennzeichnet, dass**
das Rückhalteelement (10), insbesondere die Basisenden (17), mit einem Fahrzeugdach (23), insbesondere einem Dachhimmel, verbunden ist und sich im entfalteten Zustand in Richtung eines Fahrzeugbodens (26), insbesondere vertikal, durch den Innenraum (25) erstreckt.

20. Fahrzeugsicherheitssystem nach einem der Ansprüche 17 bis 19,
**dadurch gekennzeichnet, dass**
das Rückhalteelement (10), insbesondere die Basisenden (17), zwischen zwei in Fahrtrichtung nebeneinander angeordneten Sitzen (21), insbesondere in oder an einer Mittelkonsole (24), fixiert ist und sich im entfalteten Zustand quer über einen Sitz (21) erstreckt.

## Claims

1. An adaptive deployable restraint element (10) for a vehicle safety system for protecting a vehicle occupant in a vehicle composing at least two leg elements (11, 12) at least in portions arranged substantially in V-shape relative to each other each with a base end (17) and a point (16) opposed to the base end (17) between which at least one cross brace (13, 14, 15) is arranged for connecting the leg elements (11, 12), wherein the leg elements and/or the cross brace (13, 14, 15) are/is inflatable, **characterized in that** the base ends (17) can be or are fixed within the vehicle (20) in a stationary manner and the leg elements (11, 12) are arranged such that they form a front-side leg element (11) and a rear-side leg element (12), of which the front-side leg element (11) faces the vehicle occupant and the rear-side leg element (12) is turned away from the vehicle occupant.

2. The restraint element (10) according to claim 1,
**characterized in that**
the restraint element (10) has an outer contour triangular or diamond-shaped in cross-section.

3. The restraint element (10) according to claim 1 or 2,
**characterized in that**
the restraint element has an outer contour which is circular or oval or longitudinally curved in longitudinal section.

4. The restraint element (10) according to any one of the preceding claims,
**characterized in that**
the leg elements (11, 12) are formed by a textile, especially flexible, fabric panel or by plural interconnected textile, especially flexible, fabric panels.

5. The restraint element (10) according to any one of the preceding claims,
**characterized in that**
the leg elements (11, 12) converge into a joint point (16).

6. The restraint element (10) according to claim 5,
**characterized in that**
between the leg elements (11, 12) plural cross braces (13, 14, 15) are arranged, wherein
the length of the cross braces (13, 14, 15) is reduced toward the joint point (16).

7. The restraint element (10) according to claim 6,
**characterized in that**
the cross braces (13, 14, 15) in the cross-section of the restraint element (10) are arranged rung-like between the leg elements (11, 12).

8. The restraint element (10) according to claim 6 or 7,
**characterized in that**
the cross braces (13, 14, 15) are arranged in parallel to each other.

9. The restraint element (10) according to any one of the claims 6 to 8,
**characterized in that**
the spaces between the cross braces (13, 14, 15) along a rear-side leg element (12) are larger than along a front-side leg element (11).

10. The restraint element (10) according to any one of the claims 6 to 9,
**characterized in that**
between two adjacent cross braces (13, 14, 15) at least one free space (18) is provided, wherein a height of the free space (18) is many times larger than a thickness of the cross braces (13, 14, 15) and/or of the leg elements (11, 12).

11. The restraint element (10) according to any one of the preceding claims,
**characterized in that**
each cross brace (13, 14, 15) forms an individual fluid chamber which is connected to the leg elements (11, 12) in a fluid-tight manner.

12. The restraint element (10) according to any one of the preceding claims,
**characterized in that**
a dart is arranged between each of the cross braces (13, 14, 15) and the leg elements (11, 12) such that a fluid communication between the cross braces (13, 14, 15) and the leg elements (11, 12) is tapered or closed in a gastight manner.

13. The restraint element (10) according to any one of the preceding claims,
**characterized in that**
the leg elements (11,12) are directly fluid-communicated with each other so that they form a V-shaped fluid chamber.

14. The restraint element (10) according to any one of the claims 1 to 10 or 13,
**characterized in that**
the at least one cross brace or, respectively, the cross braces (13, 14, 15) are fluid-communicated with the leg elements (11,12), especially the V-shaped fluid chamber, so that the restraint element (10) forms a joint airbag.

15. An adaptive, deployable restraint element (10) for a vehicle safety system comprising a skeleton-type structure having one or more fluid chambers, wherein the skeleton-type structure is configured so that the restraint element (10) exerts a movement and/or curvature according to the fin ray effect directed against the force pulse at least in portions by the effect of a force pulse on the restraint element from outside, the restraint element (10) being configured according to one of the claims 1 to 14.

16. An airbag module comprising a restraint element (10) according to any one of the preceding claims and a gas generator being fluid-communicated with a cross brace (13, 14, 15) and/or a leg element (11, 12) and/or a fluid chamber of the restraint element (10).

17. A vehicle safety system for a vehicle (20) comprising a restraint element (10) and/or an airbag module according to any one of the preceding claims.

18. The vehicle safety system according to claim 17,
**characterized in that**
the restraint element (10) comprises two base ends (17) and a point (16) opposed to the base ends, wherein the base ends (17) can be or are fixed within the vehicle (20) in a stationary manner and the point (16) projects freely into an interior (25) of the vehicle (20) in a deployed state of the restraint element (10).

19. The vehicle safety system according to claim 17 or 18,
**characterized in that**
the restraint element (10), especially the base ends (17), is connected to a vehicle roof (23), especially a roof lining, and in the deployed state extends in the direction of a vehicle floor (26), especially vertically, through the interior (25).

20. The vehicle safety system according to any one of the claims 17 to 19,
**characterized in that**
the restraint element (10), especially the base ends (17), is fixed, especially in or to a center console (24), between two seats (21) juxtaposed in the driving direction and in the deployed state extends across a seat (21).

## Revendications

1. Élément de retenue adaptatif et dépliable (10) pour un système de sécurité de véhicule pour la protection d'un occupant de véhicule dans un véhicule avec au moins deux éléments flancs (11, 12) disposés au moins, vus coupe, essentiellement en forme de V l'un par rapport à l'autre, chacun avec une extrémité de base (17) et une pointe (16) opposée à l'extrémité de base (17), entre laquelle au moins une jambe de force transversale (13, 14, 15) est disposée, laquelle relie les éléments flancs (11, 12), pour lequel les éléments flancs et/ou la jambe de force transversale (13, 14, 15) sont gonflable , **caractérisé en ce que** les extrémités de base (17) peuvent être fixées ou sont fixées en place dans le véhicule (20), et que les éléments flancs (11, 12) sont disposés de manière à former un élément flanc avant (11) et un élément flanc arrière (12),dont l'élément flanc avant (11) fait face à l'occupant du véhicule et l'élément flanc arrière (12) est à l'opposé de l'occupant du véhicule.

2. Elément de retenue (10) selon la revendication 1, **caractérisé en ce que** l'élément de retenue (10) présente en coupe transversale un contour extérieur triangulaire ou en forme de losange.

3. Elément de retenue (10) selon la revendication 1 ou 2, **caractérisé en ce que** l'élément de retenue a en coupe longitudinale un contour extérieur circulaire ou ovale ou allongé.

4. Elément de retenue (10) selon l'une des revendications précédentes,
**caractérisé en ce que**
les éléments flancs (11, 12) sont formés par un textile, en particulier souple, ou par plusieurs textiles interconnectés, notamment souples.

5. Elément de retenue (10) selon l'une des revendications précédentes,
**caractérisé en ce que**
les éléments flancs (11, 12) convergent vers une pointe commune (16).

6. Elément de retenue (10) selon la revendication 5,
**caractérisé en ce que**
une pluralité d'entretoises transversales (13, 14, 15) sont disposées entre les éléments flancs (11, 12), pour lequel
la longueur des entretoises transversales (13, 14, 15) se réduit vers la pointe commune (16).

7. Elément de retenue (10) selon la revendication 6,
**caractérisé en ce que**
les entretoises transversales (13, 14, 15) sont disposées en section transversale de l'élément de retenue (10) en forme de barreau entre les éléments flancs (11, 12).

8. Elément de retenue (10) selon la revendication 6 ou 7,
**caractérisé en ce que**
les entretoises transversales (13, 14, 15) sont disposées parallèlement les unes par rapport aux autres.

9. Elément de retenue (10) selon l'une des revendications 6 à 8,
**caractérisé en ce que**
les distances entre les entretoises transversales (13, 14, 15) sont plus grandes le long d'un élément flanc arrière (12) que le long d'un élément flanc avant (11).

10. Elément de retenue (10) selon l'une des revendications 6 à 9,
**caractérisé en ce que**
entre deux entretoises transversales adjacentes (13, 14, 15) est prévu Au moins un espace libre (18), pour lequel la hauteur de l'espace libre (18) est plusieurs fois supérieure à une épaisseur des entretoises transversales (13, 14, 15) et/ou des éléments flancs (11, 12).

11. Elément de retenue (10) selon l'une des revendications précédentes,
**caractérisé en ce que**
chaque entretoise transversale (13, 14, 15) forme une chambre à fluide individuelle qui est reliée de manière étanche aux fluides aux éléments flancs (11, 12).

12. Elément de retenue (10) selon l'une des revendications précédentes,
**caractérisé en ce que**
entre les entretoises transversales (13, 14, 15) et les éléments flancs (11, 12) est disposée une pince de manière à ce qu'une connexion fluide entre les entretoises transversales (13, 14, 15) et les éléments flancs (11, 12) se rétrécisse ou est étanche aux gaz.

13. Elément de retenue (10) selon l'une des revendications précédentes,
**caractérisé en ce que**
les éléments flancs (11, 12) sont directement reliés les uns aux autres par fluide de sorte qu'ils forment une chambre à fluide en forme de V.

14. Elément de retenue (10) selon l'une des revendications 1 à 10 ou 13,
**caractérisé en ce que**
la au moins une entretoise transversale ou les entretoises transversales (13, 14, 15) sont connectées par fluide aux éléments flancs (11, 12), en particulier la chambre à fluide en forme de V, de telle sorte que l'élément de retenue (10) forme un coussin gonflable commun.

15. Élément de retenue adaptatif et déployable (10) pour un système de sécurité de véhicule avec une structure en forme de cadre avec une ou plusieurs chambres à fluide, la structure en forme de cadre étant conçue de telle sorte que l'élément de retenue (10) sous l'action d'une impulsion de force externe sur l'élément de retenue, au moins en sections contre l'impulsion de force exerce un mouvement dirigé et/ou une courbure selon l'effet de faisceau d'ailettes, l'élément de retenue (10) étant conçu selon l'une des revendications 1 à 14.

16. Module de coussin gonflable avec un élément de retenue (10) selon l'une des revendications précédentes et un générateur de gaz qui est connecté en fluidique à une entretoise transversale (13, 14, 15) et/ou un élément flanc (11, 12) et/ou une chambre de fluide de l'élément de retenue (10).

17. Système de sécurité de véhicule pour un véhicule (20) avec un élément de retenue (10) et / ou un module de coussin gonflable selon l'une des revendications précédentes.

18. Système de sécurité pour véhicule selon la revendication 17,
**caractérisé en ce que**
l'élément de retenue (10) a deux extrémités de base (17) et une pointe (16) opposée aux extrémités de base, les extrémités de base (17) pouvant être fixées ou sont fixées dans le véhicule (20) et la pointe (16) dans un état déplié de l'élément de retenue (10) fait saillie librement à l'intérieur (25) du véhicule (20).

19. Système de sécurité pour véhicule selon la revendication 17 ou 18,
**caractérisé en ce que**
l'élément de retenue (10), en particulier les extrémités de base (17), est relié à un toit de véhicule (23), en particulier une garniture de pavillon et, lorsqu'il est déplié, s'étend en direction d'un plancher de véhicule (26), en particulier verticalement, à travers l'intérieur (25).

20. Système de sécurité pour véhicule selon l'une des revendications 17 à 19,
**caractérisé en ce que**
l'élément de retenue (10), en particulier les extrémités de base (17), est fixé entre deux sièges (21) disposés côte à côte dans le sens de la marche, notamment dans ou sur une console centrale (24), et s'étend sur un siège (21) à l'état déplié.
